# FASCICULE DE BREVET EUROPEEN

(11) **EP 3 657 041 B1**
(45) Date de publication et mention de la délivrance du brevet: **14.08.2024**
(21) Numéro de dépôt: 19209164.3
(22) Date de dépôt: 14.11.2019
(51) Int. Cl.: F16H 1/28, F16H 57/04, F16C 33/10, F16C 17/02

(54) **PORTE-SATELLITES POUR UN REDUCTEUR MECANIQUE DE TURBOMACHINE D'AERONEF**
PLANETENTRÄGER FÜR EIN UNTERSETZUNGSGETRIEBE EINER TURBOMACHINE EINES FLUGZEUGES
PLANET CARRIER FOR A MECHANICAL SPEED REDUCER OF AN AIRCARFT'S TUBOMACHINE

(30) Priorité: 23.11.2018 FR 1871753
(43) Date de publication de la demande: 27.05.2020
(73) Titulaire: Safran Transmission Systems, 92700 Colombes (FR)
(72) Inventeur: PTASZYNSKI, Patrice, Julien, 77550 MOISSY-CRAMAYEL (FR); MORELLI, Boris, Pierre, Marcel, 77550 MOISSY-CRAMAYEL (FR)
(74) Mandataire: Gevers & Orès

(56) Documents cités:
- EP-A1- 2 954 233
- EP-A1- 3 001 020
- EP-A1- 3 333 459
- EP-A2- 2 565 424
- WO-A1-2018/185186
- DE-A1- 102010 054 870
- FR-A1- 3 035 375
- US-A1- 2010 304 919
- US-A1- 2014 155 213
- US-B1- 9 927 021

## Description

### Domaine technique de l'invention

La présente invention concerne le domaine des réducteurs mécaniques pour des turbomachines en particulier d'aéronef.

### Arrière-plan technique

L'état de l'art comprend notamment les documents EP 3 001 020 A1, WO-A1-2010/092263, FR-A1-2 987 416, US-A1-2010/304919, EP-A1-2 954 233, US-B1-9 927 021, EP-A1-3 489 550, EP-A1-3 333 459, DE-A1-10 2010 054870, FR-A1-3 041 054 et FR-A1-3 035 375.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

La présente invention propose un perfectionnement d'un porte-satellites de réducteur avec une solution simple, efficace et économique pour limiter le risque de désalignement des satellites en fonctionnement.

### Résumé de l'invention

L'invention concerne un porte-satellites pour un réducteur mécanique de turbomachine, en particulier d'aéronef, ce porte-satellites ayant un axe de rotation et comportant des axes de guidage de satellites qui sont disposés autour et parallèlement à l'axe de rotation, chacun desdits axes de guidage ayant une forme générale tubulaire dont la périphérie externe comprend uniquement deux pistes cylindriques coaxiales de roulement respectifs de deux rangées annulaires de roulements, caractérisé en ce que chacun desdits axes a une périphérie interne sensiblement biconique et comportant deux surfaces tronconiques coaxiales et adjacentes, ces surfaces tronconiques internes convergeant l'une vers l'autre, s'étendant respectivement radialement à l'intérieur desdites pistes et étant reliées l'une à l'autre par une surface cylindrique interne comportant une bride annulaire radialement interne.

La bride sert à fixer un noyau de lubrification et de refroidissement de l'axe et des paliers de guidage des satellites.

Le désalignement des pistes d'un roulement doit être réduit pour assurer son bon fonctionnement sous charge. En effet, un désalignement des pistes trop important engendre un pincement des roulements et augmente fortement les pressions de contact à leurs extrémités. De plus, selon la configuration du réducteur, un désalignement des satellites peut subsister et générer une surcharge des dentures des satellites. En effet, les déformations du porte-satellites sous charge peuvent engendrer un désalignement des pistes qui vont prendre un angle par rapport à leur position initiale et ainsi venir désaligner les dentures des satellites et engendrer une surcharge. On pourrait gérer le problème en modifiant la raideur du porte-satellites par exemple en assouplissant ou en raidissant son côté amont ou aval. Cependant, le design du porte-satellites est aussi contraint par les charges qu'il doit passer et il n'est souvent pas possible « d'équilibrer » totalement celui-ci. Une manière simple de réduire encore la surcharge denture est de jouer sur les ratios de raideur entre côté amont et aval des pistes en ajustant les positions axiales des surfaces tronconiques. On peut les déplacer et déplacer ainsi le « bicône » de ±10% de sa longueur totale sans affecter les gains sur le pincement des roulements (cela équivaut à ±20% sur la longueur des surfaces tronconiques), et ainsi rééquilibrer l'ensemble porte-satellites et des pistes et réduire la surcharge au niveau des dentures.

L'invention permet de réduire les déformations et donc les désalignements des pistes en faisant varier le profil et donc l'épaisseur de chaque axe de guidage le long de l'axe de rotation. Les meilleurs résultats sont obtenus avec une forme biconique car elle rigidifie l'axe en son milieu et laisse libre les extrémités longitudinales de l'axe de se déformer. Cette forme optimise le désalignement à masse équivalente. L'angle de cône de chaque surface tronconique influe directement sur la valeur de désalignement. Le gain sur le désalignement en comparaison à un axe à périphérie interne cylindrique, peut être de plus de 50%.

La solution proposée ci-dessous est compatible de tout type de réducteur (planétaire, épicycloïdale, etc.). Elle est compatible de tout type de denture (droite, chevron), de tout type de porte-satellites, qu'il soit monobloc ou de type cage-porte / cage, et elle est compatible avec des paliers de satellites composés d'éléments roulants (roulements à billes, à rouleaux, à rouleaux coniques, etc.).

Le porte-satellites selon l'invention peut comprendre les caractéristiques suivantes, comme divulguées dans les revendications dépendantes:
- l'extrémité de plus grand diamètre de chacune des surfaces tronconiques est reliée à une autre surface cylindrique interne ; ce type de surface cylindrique peut servir au centrage et au maintien du noyau précité,
- chacun desdits axes comporte des orifices radiaux traversants de passage d'huile débouchant sur lesdites surfaces tronconiques ; l'axe est ainsi refroidi par l'huile qui est ensuite destinée à être acheminée jusqu'aux paliers en vue de leur lubrification,
- lesdits orifices débouchent aux sommets de nervures annulaires radialement externes prévues à la périphérie externe de chacun desdits axes et délimitant entre elles lesdites pistes ; les pistes et les nervures sont avantageusement formées d'une seule pièce avec l'axe qui est du type à bague interne de palier(s) intégrée,
- lesdites surfaces tronconiques ont sensiblement une même longueur le long dudit axe de rotation et un même angle de cône ; l'axe de guidage présente ainsi une symétrie de révolution autour de son axe longitudinal ; « sensiblement une même longueur » signifie ici un écart maximum de longueur entre les surfaces tronconiques de 20%,
- lesdites surfaces tronconiques ont chacune un angle de cône compris entre 10 et 50°, et de préférence entre 20 et 40°, et
- un noyau de lubrification et de refroidissement est monté à l'intérieur de chacun desdits axes de guidage de façon à recouvrir au moins lesdites surfaces tronconiques.

L'invention concerne en outre une turbomachine, en particulier d'aéronef, comportant un réducteur mécanique équipé d'un porte-satellites tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une vue en coupe d'un réducteur mécanique intégrant un aspect de l'invention,
[Fig.4] la figure 4 est une vue en coupe d'un détail de la figure 3 et montre un axe de guidage d'un satellite dans lequel est monté un noyau de lubrification et de refroidissement,
[Fig.5] la figure 5 est une vue en perspective éclatée de l'axe et du noyau de la figure 4,
[Fig.6] la figure 6 est une vue en coupe selon la ligne X-X de la figure 4, [Fig.7] la figure 7 est une vue similaire à celle la figure 4 et montre le cheminement d'huile de lubrification et de refroidissement,
[Fig.8] la figure 8 est une vue similaire à celle de la figure 4 et illustrant une variante de réalisation du noyau,
[Fig.9] la figure 9 est une vue similaire à celle la figure 8 et montre le cheminement d'huile de lubrification et de refroidissement.

### Description détaillée de l'invention

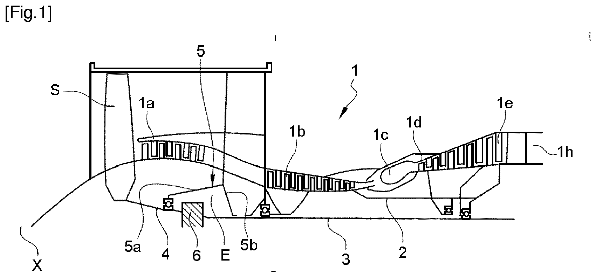

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

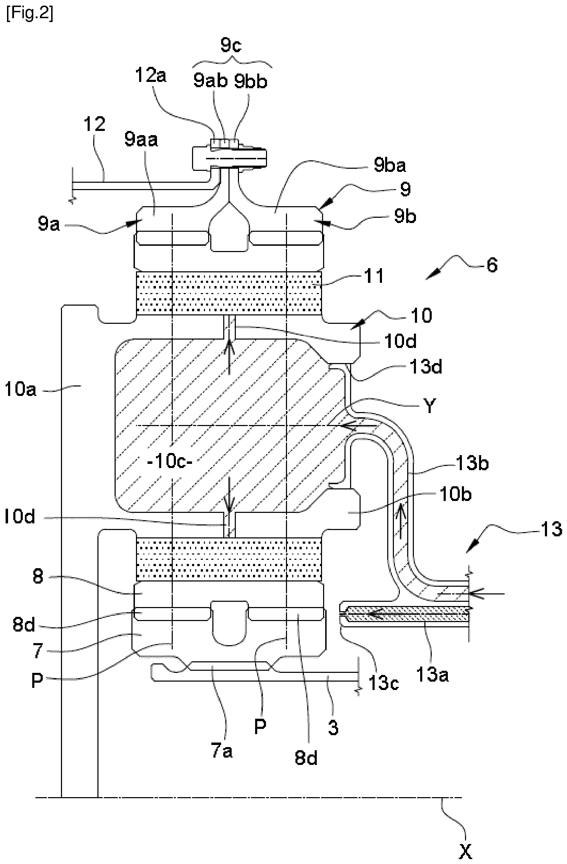

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application. L'ensemble des satellites 8 est maintenus par un châssis appelé porte-satellites 10. Chaque satellite 8 tourne autour de son propre axe Y, et engrène avec la couronne 9.

En sortie nous avons :
▪ Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P.

Dans notre exemple, nous détaillons le fonctionnement d'un réducteur à plusieurs hélices avec une couronne séparée en deux demi-couronnes:
▪ Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
▪ Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices avant et sur un autre plan médian P pour les hélices arrière. Dans les autres figures, dans le cas d'un roulement à deux rangées de rouleaux, chaque rangée d'éléments roulants est aussi centrée sur deux plans médians.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

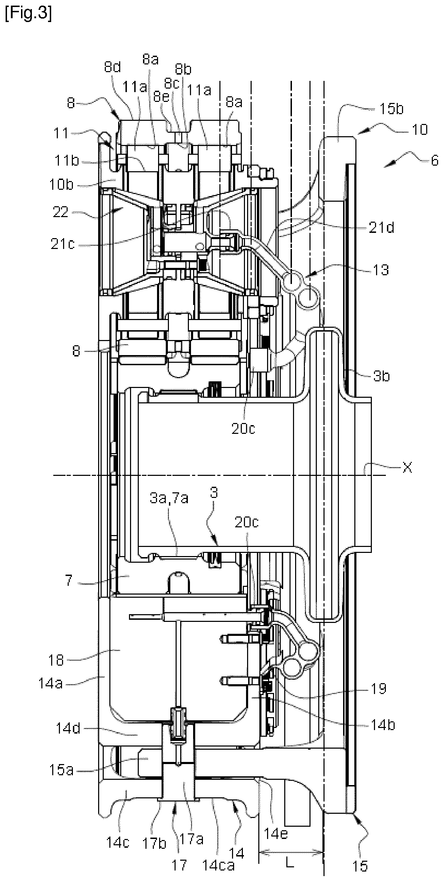

La figure 3 représente un mode de réalisation d'un porte-satellites 10 selon l'invention.

Le porte-satellites 10 du réducteur 6 de la figure 3 est du type à cage 14 et porte-cage 15, la cage 14 et le porte-cage 15 étant reliés par des liaisons à rotules.

La cage 14 comprend deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par des couples de pontets 14c, 14d, régulièrement répartis autour de l'axe X. Ces couples de pontets assurent une liaison structurelle entre les parois 14a, 14b. Chaque couple de pontets comprend deux pontets, respectivement radialement externe 14c et radialement interne 14d, qui s'étendent sensiblement parallèlement le long de l'axe X à distance radiale l'un de l'autre.

Les couples de pontets 14c, 14d définissent entre eux des lumières qui s'étendent circonférentiellement autour de l'axe X et sont délimitées axialement par les bords périphériques externes des parois 14a, 14b. Les couples de pontets sont au nombre de 5 dans l'exemple représenté.

Chaque couple de pontets forme une chape pour accueillir un doigt 15a du porte-cage 15. Autrement dit, les pontets de chaque couple définissent entre eux un logement de réception d'un doigt 15a du porte-cage 15. Des ouvertures 14e de forme oblongue sont réalisées dans la paroi arrière 14b de telle sorte à laisser passer les doigts 15a entre les pontets 14c, 14d. La paroi 14a peut comporter des ouvertures similaires alignées axialement avec les ouvertures 14e de la paroi 14b.

Le nombre de doigts 15a est égal au nombre de couples de pontets 14c, 14d et est de 5 dans l'exemple représenté. Ces doigts 15a s'étendent en saillie axialement vers l'amont depuis un anneau 15b du porte-cage 15 s'étendant autour de l'axe X. Les doigts 15a du porte-cage 15 sont engagés dans les logements inter-pontets par translation axiale depuis l'arrière, à travers les ouvertures 14e de la paroi 14b.

Chaque doigt 15a comprend, sensiblement en son milieu, un évidement de montage d'une rotule (non représentée) destinée à être traversée par une broche cylindrique 17 portée par chaque couple de pontets 14c, 14d. Chaque broche 17 traverse le logement inter-pontets et a une orientation sensiblement radiale par rapport à l'axe X. Chaque broche 17 comporte un corps cylindrique 17a relié à une extrémité, ici radialement externe, à une collerette 17b. La broche 17 est ici engagée par translation radiale depuis l'extérieur à travers des orifices radiaux des pontets 14c, 14d, sa collerette 17b étant destinée à venir en appui radial sur une face plane 14ca du pontet externe 14c. Après insertion de la broche 17 dans les orifices des pontets, jusqu'à mise en appui de la collerette 17b sur le pontet externe, la collerette 17b est fixée à ce pontet par exemple par vissage.

Comme on le voit dans les dessins, en position assemblée, l'anneau 15b du porte-cage 15 est écarté axialement d'une distance L1 prédéterminée de la paroi arrière 14b en regard de la cage 14 (figure 3).

La cage 14 définit un logement interne de réception du solaire 7 d'axe X, des satellites 8 disposés autour du solaire 7 et engrenés avec lui, ainsi que de déflecteurs 18.

Comme décrit dans ce qui précède en relation avec la figure 2, le solaire 7 comprend des cannelures internes 7a d'accouplement à des cannelures externes 3a complémentaires de l'arbre BP 3 (figure 3). On peut constater que les cannelures 3a sont situées à l'extrémité avant de l'arbre BP 3 qui comprend un tronçon aval 3b en forme de soufflet. Ce tronçon 3b est ici situé dans un plan perpendiculaire à l'axe X qui est écarté axialement de la cage 14 du porte-satellites 10 et qui passe sensiblement par l'anneau 15b du porte-cage 15. Ce tronçon 3b confère à l'arbre BP 3 une certaine souplesse limitant la transmission des efforts du moteur en fonctionnement.

Le réducteur 6 comprend un distributeur 13 d'huile de lubrification. Le distributeur 13 a une forme générale annulaire autour de l'axe X et est formé d'une seule pièce. Il est ici rapporté et fixé sur le porte-satellites 10 et comprend pour cela des pattes 19a de fixation sur la cage 14 du porte-satellites et en particulier sur sa paroi arrière 14b.

Le distributeur 13 comprend des sorties d'huile 20c qui sont raccordées aux déflecteurs 18 en vue de leur alimentation en huile.

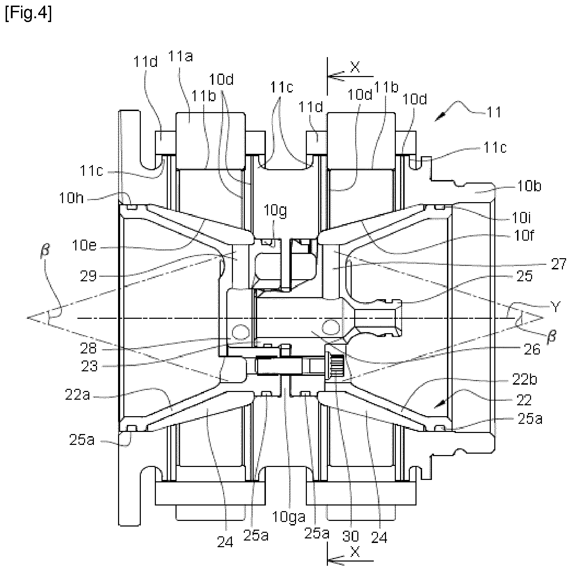

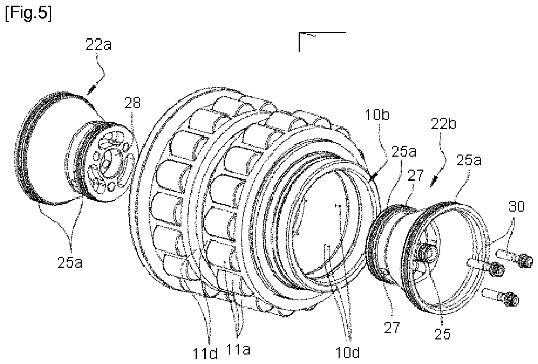

Le distributeur 13 comprend en outre des sorties d'huile 21c qui sont raccordées à des noyaux 22 de lubrification et de refroidissement, qui vont maintenant être décrits en références aux figures 4 à 9.

Les noyaux 22 ont pour fonction de lubrifier et de refroidir les axes 10b des satellites 8 qui sont ici centrés et guidés par les paliers 11 à rouleaux 11a.

Dans les exemples de réalisation représentés, chaque axe 10b est guidé par un palier 11 à double roulement, ici à double rangée de rouleaux 11a. Les deux rangées s'étendent autour d'un même axe qui est confondu avec celui, noté Y, de l'axe 10b du satellite 8.

Classiquement, les rouleaux 11a sont guidés dans des pistes définies par des bagues interne et externe. Dans les exemples représentés, une particularité est liée au fait que les bagues internes de guidage des rouleaux 11a sont intégrées à l'axe 10b. La périphérie externe de l'axe 10b comprend ainsi des pistes cylindriques 11b de roulement des rouleaux 11a, chaque piste 11b étant délimitée axialement par des nervures annulaires 11c qui servent elles au guidage de cages 11d de maintien des rouleaux 11a. Par ailleurs, la figure 3 permet de voir que les bagues externes sont intégrées à la périphérie interne des satellites 8. La périphérie interne des satellites 8 comprend ainsi des pistes cylindriques 8a de roulement des rouleaux 11a, les pistes 8a étant séparées l'une de l'autre par une rainure annulaire 8b débouchant radialement vers l'intérieur et au fond de laquelle sont formées des perçages radiaux 8c de passage d'huile.

La périphérie externe de chaque satellite 8 comprend une denture 8d à double hélice, c'est-à-dire deux hélices coaxiales et adjacentes qui sont ici séparées l'une de l'autre par une rainure annulaire 8e débouchant radialement vers l'extérieur et au fond de laquelle débouchent les perçages 8c.

La périphérie interne de l'axe 10b de chaque satellite 8 a une forme générale biconique et comprend deux surfaces tronconiques internes 10e, 10f évasées dans des directions axiales opposées. La surface tronconique interne avant 10e est ainsi évasée vers l'avant et la surface tronconique interne arrière 10f est évasée vers l'arrière. Dans l'exemple représenté, une surface cylindrique 10g est située entre les surfaces tronconiques 10e, 10f, une surface cylindrique interne avant 10h s'étend entre l'extrémité avant de l'axe 10b et l'extrémité avant de la surface 10e, et une surface cylindrique interne arrière 10i s'étend entre l'extrémité arrière de l'axe 10b et l'extrémité arrière de cet axe 10b.

Des orifices 10d de passage d'huile traversent les axes 10b en direction radiale, et s'étendent donc entre leurs périphéries interne et externe. Dans l'exemple représenté, ils s'étendent entre les surfaces tronconiques 10e, 10f, d'une part, et les pistes 11b et les périphéries externes des nervures 11c, d'autre part.

Une bride annulaire 10ga de fixation du noyau 22 s'étend radialement vers l'intérieur depuis la surface cylindrique 10g. Cette bride 10ga comprend des orifices axiaux de passage de vis 30.

Le noyau 22 représenté aux figures 4 à 7 comprend deux flasques annulaires 22a, 22b coaxiaux et sensiblement tronconiques comportant chacun une première extrémité de plus grand diamètre et une seconde extrémité opposée de plus petit diamètre. Les flasques, respectivement avant 22a et arrière 22b, sont fixés ensemble par leurs secondes extrémités. Comme les surfaces 10e, 10f, les flasques 22a, 22b s'évasent donc dans des directions axiales opposées.

Les flasques 22a, 22b sont montés ajustés à l'intérieur de l'axe 10b et sont destinés à recouvrir les surfaces tronconiques 10e, 10f pour définir avec celles-ci au moins une cavité annulaire 24 de circulation d'huile de lubrification et de refroidissement de l'axe 10b. Dans l'exemple représenté, ces cavités 24 sont au nombre de deux qui sont séparées l'une de l'autre par la bride 10ga.

Les extrémités des flasques 22a, 22b comportent chacune une surface cylindrique externe de centrage comportant une gorge annulaire de réception d'un joint d'étanchéité 25a. Le flasque avant 22a comporte une extrémité amont montée ajustée par sa surface cylindrique externe sur la surface 10h, et une extrémité aval montée ajustée par sa surface cylindrique externe sur la surface 10g, en avant de la bride 10ga. Le flasque arrière 22b comporte une extrémité amont montée ajustée par sa surface cylindrique externe sur la surface 10h, en arrière de la bride 10ga, et une extrémité aval montée ajustée par sa surface cylindrique externe sur la surface 10i.

On constate à la figure 4 que les orifices 10d débouchent radialement à l'intérieur dans les cavités 24. On constate également que les flasques 22a, 22b comprennent des moyens de raccordement fluidique des cavités 24 au distributeur 13 décrit dans ce qui précède.

Le flasque arrière 22b comprend ici une chambre interne 26 centrée sur l'axe Y et reliée d'une part par des passages radiaux 27 formés dans ce flasque à la cavité 24 délimitée par ce flasque et la surface 10f. Ce flasque 22b comporte en outre une tubulure de raccordement 25 centrée sur l'axe Y dont une extrémité débouche dans la chambre 26 et dont l'extrémité opposée orientée vers l'arrière forme un raccord mâle destiné à recevoir par emmanchement un raccord femelle d'une sortie 21c du distributeur 13. En variante, la tubulure 25 pourrait former un raccord femelle.

Le flasque arrière 22b est monté ajusté dans l'axe 10b par translation axiale depuis l'arrière jusqu'à ce que son extrémité avant soit en appui axial sur la bride 10ga. Le flasque 22b comprend à son extrémité avant une autre tubulure de raccordement 23 centrée sur l'axe Y, qui définit une partie d'extrémité avant de la chambre 26 et qui est destinée à traverser axialement la bride 10ga, en son milieu, en vue du raccordement de la chambre 26 à une chambre interne 28 du flasque avant 22a. La chambre 26 s'étend ainsi entre la tubulure 25 et la chambre 28, cette dernière étant reliée à la cavité 24 formée entre le flasque 22a et la surface 10e par des perçages 29 formés dans ce flasque.

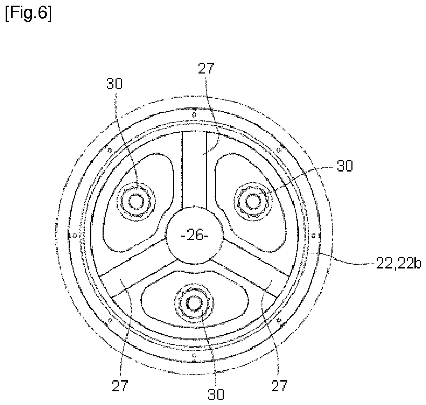

Les perçages 27, 29 de chaque flasque 22a, 22b sont au nombre de trois (ce nombre peut varier entre 1 et plus) et régulièrement répartis autour de l'axe Y (figure 6). Dans l'exemple, ils sont au même nombre de vis de fixation. Le nombre dépend principalement de la place radiale qu'il reste après ou avant implantation des vis. Les flasques 22a, 22b comportent en outre chacun des orifices de passage ou de vissage de vis 30 de fixation entre eux et à la bride 10ga. Les orifices des flasques sont alignés ensemble et à ceux de la bride 10ga et les vis 30 sont vissées depuis l'arrière à travers, dans l'ordre, un orifice du flasque 22b, un orifice aligné de la bride 10ga et un orifice du flasque 22a (cf. figure 4).

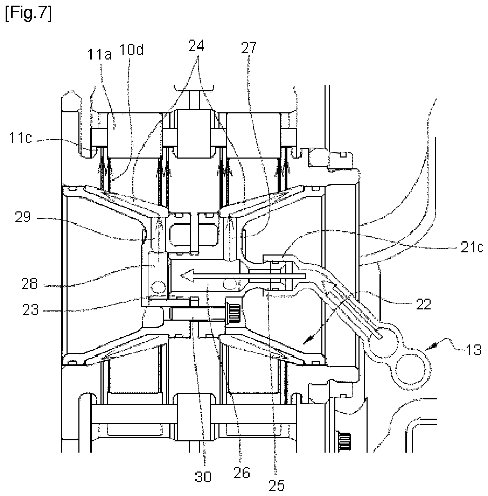

La figure 7 montre le cheminement de l'huile depuis le distributeur 13 jusqu'aux rouleaux 11a, en vue de la lubrification des rouleaux mais aussi le refroidissement de l'axe 10b. L'huile pénètre dans la chambre 26 par la tubulure 25 puis dans la chambre 28 par la tubulure 23. Les chambres 26 et 28 permettent de ralentir le flux d'huile (et d'éviter un effet Venturi au droit des perçages 27, 29) et de mieux répartir l'huile entre les flasques avant et arrière. L'huile circule ensuite dans les perçages 27, 29 pour alimenter les cavités 24. L'huile s'écoule axialement le long des surfaces, de l'arrière vers l'amont sur la surface 10e, du fait que les perçages 29 débouchent à l'extrémité arrière de la cavité avant 24, et de l'avant vers l'arrière sur la surface 10f, du fait que les perçages 27 débouchent à l'extrémité avant de la cavité arrière 24. L'huile circule ensuite dans les orifices 10d pour atteindre les pistes 11b et les nervures 11c en vue de la lubrification des rouleaux 11a et des cages 11d. L'huile est amenée « froide » par le distributeur 13. Elle circule dans l'axe 10b qui est chaud et est donc réchauffée. Elle arrive ainsi à une bonne température pour un rendement optimal de lubrification au niveau du palier tout en ayant évacuée la chaleur générée. La quantité de chaleur prise par l'huile dépend notamment de la forme des flasques 22a, 22b.

L'épaisseur ou la dimension radiale de la cavité 24 est choisie en fonction de l'augmentation de température attendue de l'huile destinée à circuler dans cette cavité, par exemple entre 10°C et 60°C. La température de l'huile en sortie des orifices 10d est également fonction de l'angle d'inclinaison des surfaces tronconiques 10e, 10f et des flasques 22a, 22b, par rapport à l'axe Y.

Cet angle d'inclinaison et plus particulièrement l'angle de cône β de chaque surface tronconique 10e, 10f est de préférence choisi pour rigidifier la partie médiane de l'axe 10b et rendre libres ses extrémités longitudinales. Les extrémités longitudinales sont ainsi plus souples et plus susceptibles de se déformer sous chargement en fonctionnement, ce qui permet de mieux maîtriser les déformations de l'axe 10b en fonctionnement et d'éviter que des déformations non maîtrisées aient un impact sur les pistes 11b. Les pistes 11b restent cylindriques et coaxiales et ne subissent pas de désalignement. Les angles de cône β des surfaces 10e, 10f sont avantageusement identiques et compris entre 10 et 50°, et de préférence entre 20 et 40°.

Dans l'exemple représenté, les surfaces tronconiques 10e, 10f ont des longueurs ou dimensions axiales sensiblement identiques. En variante, ces longueurs pourraient être différentes et varier de 10 à 20% l'une par rapport à l'autre. Ceci permet de faire varier axialement la raideur de l'axe 10b et de réduire la surcharge au niveau des dentures des satellites.

A titre d'exemple, l'une des surfaces 10e, 10f peut avoir une longueur minimale de 48mm et l'autre peut avoir une longueur maximale de 72mm, le « bicône » ayant une longueur totale de 120mm environ.

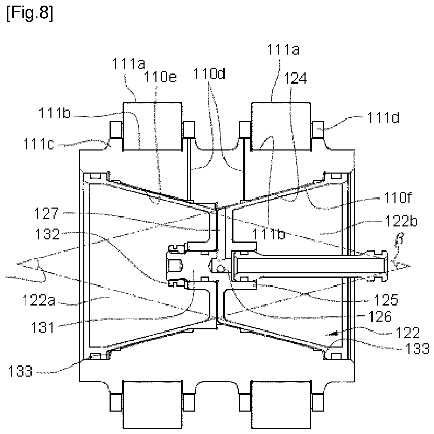

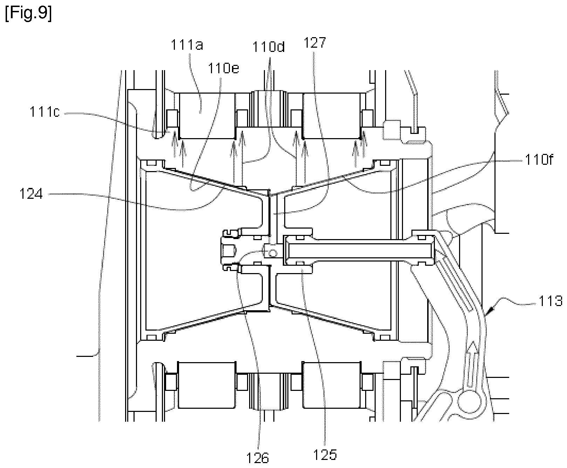

Les figures 8 et 9 représentent une variante de réalisation du noyau qui est désigné par la référence 122. Ses caractéristiques sont désignées par les mêmes chiffres de référence que celles du noyau 22, augmentés d'une centaine. La description qui précède en relation avec le noyau 22 s'applique à cette variante dans la mesure où elle ne contredit pas ce qui suit.

Le noyau 122 diffère du précédent mode de réalisation notamment en ce que les flasques 122a, 122b définissent une seule cavité annulaire 124 avec la périphérie interne de l'axe 110b. Cet axe 110b ne comprend pas ici de surface cylindrique interne entre ses surfaces tronconiques 110e, 110f. Les extrémités de plus petit diamètre des surfaces tronconiques 110e, 110f sont ainsi directement reliées l'une à l'autre. La périphérie interne de l'axe 110b ne comprend pas de bride 10ga du type précité. La cavité 124 a une forme générale de « diabolo ». On peut également constater que l'épaisseur radiale de cette cavité 124 est inférieure à celle dans le précédent mode de réalisation. Les orifices 110d de passage d'huile sont répartis en rangées annulaires et chaque rangée d'orifices débouche dans la cavité 124, dans le fond d'une rainure annulaire radialement interne formée sur la surface 110e, 110f.

La chambre 126 du flasque arrière 122b est en communication fluidique avec la tubulure 125 et avec des perçages radiaux 127 qui débouchent dans la cavité 124. Cette chambre 126 est ici fermée à son extrémité avant. La chambre 126 est donc seulement formée dans le flasque arrière 122b. Les perçages 127 peuvent également être formés seulement dans le flasque arrière 122b ou bien formés dans ce flasque 122b et fermé axialement par le flasque avant 122a.

Le flasque arrière 122b comprend un prolongement cylindrique central 131 vers l'avant qui comporte un filetage externe et qui traverse un orifice central du flasque avant 122a. Ce prolongement 131 reçoit un écrou 132 vissé depuis l'avant qui prend appui axialement sur le flasque avant, en vue du serrage de l'ensemble. Du fait de l'absence de la bride 10ga du précédent mode de réalisation, les flasques 122a, 122b sont fixés seulement l'un à l'autre et son maintenus en position à l'intérieur de l'axe 110b par le seul montage ajusté des flasques sur la périphérie interne de l'axe 110b. Le serrage de l'écrou 132 génère un serrage axial de la périphérie interne de l'axe 110b entre les flasques 122a, 122b du fait de la complémentarité de formes.

Comme cela est visible dans les dessins, les extrémités de plus grand diamètre des flasques peuvent en outre être serrées axialement contre des épaulements cylindriques 133 de la périphérie interne de l'axe 110b, lors du serrage de l'écrou 132.

La figure 9 montre le cheminement de l'huile depuis le distributeur 113 jusqu'aux rouleaux 111a, en vue de la lubrification des rouleaux mais aussi le refroidissement de l'axe 110b. L'huile pénètre dans le distributeur 113 comme indiqué dans ce qui précède puis pénètre dans la chambre 126 par la tubulure 125. L'huile circule ensuite dans les perçages 127 pour alimenter la cavité 124, sensiblement en son milieu. L'huile s'écoule axialement le long des surfaces 110e, 110f, depuis le centre de la cavité vers l'arrière et vers l'avant. L'huile circule ensuite dans les orifices 110d pour atteindre les pistes 111b et les nervures 111c en vue de la lubrification des rouleaux 111a et de la cage 111d.

## Revendications

1. Porte-satellites (10) pour un réducteur mécanique (6) de turbomachine (1), en particulier d'aéronef, ce porte-satellites ayant un axe de rotation (X) et comportant des axes (10b) de guidage de satellites (8) qui sont disposés autour et parallèlement à l'axe de rotation (X), chacun desdits axes de guidage ayant une forme générale tubulaire dont la périphérie externe comprend uniquement deux pistes cylindriques (11b, 111b) coaxiales et adjacentes de roulement respectifs de deux rangées annulaires de roulements (11a, 111a), chacun desdits axes ayant une périphérie interne sensiblement biconique et comportant deux surfaces tronconiques (10e, 10f, 110e, 110f) coaxiales, ces surfaces tronconiques internes convergeant l'une vers l'autre, s'étendant respectivement radialement à l'intérieur desdites pistes et étant reliées l'une à l'autre par une surface cylindrique interne (10g), **caractérisé en ce que** la surface cylindrique interne (10g) comporte une bride annulaire radialement interne (10ga) de fixation d'un noyau (22) de lubrification et de refroidissement de l'axe et de paliers (11) de guidage des satellites (8).

2. Porte-satellites (10) selon la revendication 1, dans lequel l'extrémité de plus grand diamètre de chacune des surfaces tronconiques (10e, 10f, 110e, 110f) est reliée à une autre surface cylindrique interne (10h, 10i).

3. Porte-satellites (10) selon l'une des revendications précédentes, dans lequel chacun desdits axes (10b, 110b) comporte des orifices radiaux (10d, 110d) traversants de passage d'huile débouchant sur lesdites surfaces tronconiques (10e, 10f, 110e, 110f).

4. Porte-satellites (10) selon la revendication précédente, dans lequel lesdits orifices (10d, 110d) débouchent aux sommets de nervures annulaires (11c, 111c) radialement externes prévues à la périphérie externe de chacun desdits axes (10b, 110b) et délimitant entre elles lesdites pistes (11b, 111b).

5. Porte-satellites (10) selon l'une des revendications précédentes, dans lequel lesdites surfaces tronconiques (10e, 10f, 110e, 110f) ont sensiblement une même longueur le long dudit axe de rotation (X) et un même angle de cône.

6. Porte-satellites (10) selon l'une des revendications précédentes, dans lequel lesdites surfaces tronconiques ont chacune un angle de cône (β) compris entre 10 et 50°, et de préférence entre 20 et 40°.

7. Porte-satellites (10) selon l'une des revendications précédentes, dans lequel un noyau (22, 122) de lubrification et de refroidissement est monté à l'intérieur de chacun desdits axes de guidage (10b, 110b) de façon à recouvrir au moins lesdites surfaces tronconiques (10e, 10f, 110e, 110f).

8. Turbomachine, en particulier d'aéronef, comportant un réducteur mécanique (6) équipé d'un porte-satellites (10) selon l'une des revendications précédentes.

## Patentansprüche

1. Satellitenträger (10) für ein mechanisches Untersetzungsgetriebe (6) eines Turbotriebwerks (1), insbesondere eines Luftfahrzeugs, wobei der Satellitenträger eine Rotationsachse (X) aufweist und Achsen (10b) zur Führung von Satelliten (8) umfasst, die um die Rotationsachse (X) herum und parallel dazu angeordnet sind, wobei jede der Führungsachsen eine allgemein röhrenförmige Form aufweist, von der der Außenumfang einzig zwei zylindrische Bahnen (11b, 111b) aufweist, die koaxial und den jeweiligen Lagern der zwei ringförmigen Reihen von Lagern (11a, 111a) benachbart sind, wobei jede der Achsen einen im Wesentlichen bikonischen Innenumfang und zwei koaxiale kegelstumpfförmige Oberflächen (10e, 10f, 110e, 110f) aufweist, wobei die kegelstumpfförmigen Innenoberflächen zueinander hin konvergieren, wobei sie sich jeweils radial im Inneren der Bahnen erstrecken und durch eine zylindrische Innenoberfläche (10g) miteinander verbunden sind, **dadurch gekennzeichnet, dass** die zylindrische Innenoberfläche (10g) einen inneren, radialen, ringförmigen Flansch (10ga) zur Befestigung eines Rings (22) zur Schmierung und Kühlung der Achse und der Lageranordnung (11) der Führung der Satelliten (8) umfasst.

2. Satellitenträger (10) nach Anspruch 1, wobei das Ende mit dem größten Durchmesser von jeder der kegelstumpfförmigen Oberflächen (10e, 10f, 110e, 110f) mit einer anderen zylindrischen Innenoberfläche (10h, 10i) verbunden ist.

3. Satellitenträger (10) nach einem der vorstehenden Ansprüche, wobei jede der Achsen (10b, 110b) radiale, durchgehende Öffnungen (10d, 110d) zum Durchgang von Öl umfasst, die auf den kegelstumpfförmigen Oberflächen (10e, 10f, 110e, 110f) münden.

4. Satellitenträger (10) nach dem vorstehenden Anspruch, wobei die Öffnungen (10d, 110d) an den Scheitelpunkten von radial äußeren ringförmigen Wulsten (11c, 111c) münden, die an dem Außenumfang von jeder der Achsen (10b, 110b) bereitgestellt sind und zwischen ihnen die Bahnen (11b, 111b) abgrenzen.

5. Satellitenträger (10) nach einem der vorstehenden Ansprüche, wobei die kegelstumpfförmigen Oberflächen (10e, 10f, 110e, 110f) entlang der Rotationsachse (X) im Wesentlichen eine gleiche Länge und einen gleichen Kegelwinkel aufweisen.

6. Satellitenträger (10) nach einem der vorstehenden Ansprüche, wobei die kegelstumpfförmigen Oberflächen jeweils einen Kegelwinkel (β) zwischen 10 und 50° und vorzugsweise zwischen 20 und 40° aufweisen.

7. Satellitenträger (10) nach einem der vorstehenden Ansprüche, wobei ein Ring (22, 122) zur Schmierung und Kühlung im Inneren von jeder der Führungsachsen (10b, 110b) auf eine Weise montiert ist, um mindestens die kegelstumpfförmigen Oberflächen (10e, 10f, 110e, 110f) zu bedecken.

8. Turbotriebwerk, insbesondere eines Luftfahrzeugs, das ein mechanisches Untersetzungsgetriebe (6) umfasst, das mit einem Satellitenträger (10) nach einem der vorstehenden Ansprüche ausgestattet ist.

## Claims

1. A planet carrier (10) for a mechanical reduction gear (6) of a turbine engine (1), in particular an aircraft, this planet carrier having a rotation axis (X) and comprising axes (10b) for guiding the planet gears (8) that are arranged around and parallel to the rotation axis (X), each of said guiding axes having a generally tubular shape whose outer periphery comprises only two coaxial and adjacent cylindrical tracks (11b, 111b) for the respective rollers of two annular rows of rollers (11a, 111a), each of said axes having an inner periphery that is substantially bi-conical and comprises two coaxial and adjacent frustoconical surfaces (10e, 10f, 110e, 110f), these inner frustoconical surfaces converging towards each other, extending respectively radially inside said tracks and being connected to each other by an inner cylindrical surface (10g), **characterized in that** the inner cylindrical surface (10g) comprises a radially inner annular flange (10ga) for fixing a lubricating and cooling core (22) of the axis and bearings (11) for guiding the planet gears (8).

2. The planet carrier (10) according to claim 1, wherein the greatest diameter end of each of the frustoconical surfaces (10e, 10f, 110e, 110f) is connected to another inner cylindrical surface (10h, 10i).

3. The planet carrier (10) according to one of the preceding claims, wherein each of said axes (10b, 110b) comprises radial through-orifices (10d, 110d) for the passage of oil opening on said frustoconical surfaces (10e, 10f, 110e, 110f).

4. The planet carrier (10) according to the preceding claim, wherein said orifices (10d, 110d) open onto the tops of radially external annular ribs (11c, 111c) provided at the outer periphery of each of said axes (10b, 110b) and delimiting between themselves said tracks (11b, 111b).

5. The planet carrier (10) according to one of the preceding claims, wherein said frustoconical surfaces (10e, 10f, 110e, 110f) have substantially the same length along said rotation axis (X) and substantially the same cone angle.

6. The planet carrier (10) according to one of the preceding claims, wherein said frustoconical surfaces each have a cone angle (β) ranging from 10 to 50°, and preferably from 20 to 40°.

7. The planet carrier (10) according to one of the preceding claims, wherein a lubrication and cooling core (22, 122) is mounted inside each of said guiding axes (10b, 110b) so as to cover at least said frustoconical surfaces (10e, 10f, 110e, 110f).

8. A turbine engine, in particular of an aircraft, comprising a mechanical reduction gear (6) equipped with a planet carrier (10) according to one of the preceding claims.
